# EUROPÄISCHE PATENTSCHRIFT

(11) **EP 3 112 121 B1**
(45) Veröffentlichungstag und Bekanntmachung des Hinweises auf die Patenterteilung: **12.06.2019**
(21) Anmeldenummer: 15175109.6
(22) Anmeldetag: 02.07.2015
(51) Int. Cl.: B29C 45/26, B29C 45/73, B29L 31/00

(54) **SPRITZGIESSWERKZEUG MIT TEMPERIERSYSTEM**
INJECTION MOULD WITH TEMPERATURE-REGULATING SYSTEM
OUTIL DE MOULAGE PAR INJECTION DOTÉ D'UN SYSTEME DE THERMOREGULATION

(43) Veröffentlichungstag der Anmeldung: 04.01.2017
(73) Patentinhaber: Gerresheimer Regensburg GmbH, 93047 Regensburg (DE)
(72) Erfinder: Lindner, Sandra, 92536 Pfreimd (DE); Lingl, Rainer, 92648 Vohenstrauß (DE); Bernklau, Otto, 92253 Schnaittenbach (DE); Heining, Holger, 93059 Lappersdorf (DE)
(74) Vertreter: Hannke, Christian

(56) Entgegenhaltungen:
- WO-A2-2011/034281
- JP-A- H08 103 930
- JP-A- 2006 007 271
- JP-A- 2007 276 224

## Beschreibung

Die Erfindung betrifft ein Spritzgießwerkzeug mit einer Kavität zur Aufnahme einer Kunststoffschmelze, wobei die Kavität einen plattenförmigen ersten Anteil und eine Vielzahl von dazu senkrecht angeordneten und zueinander benachbart angeordneten hohlzylindrischen zweiten Anteilen umfasst, und mit einem Temperiersystem, welches in Kanalabschnitte unterteilte Temperierkanäle für den Transport eines Temperiermediums sowie einen ersten und einen zweiten Temperiermediumanschluss umfasst.

Medizinische Behälter, insbesondere Packmittel für medizinische Substanzen, werden üblicherweise von Primärpackmittelherstellern unter Reinraumbedingungen hergestellt, abgepackt und sterilisiert. Solche medizinischen Behälter können Spritzenkörper, Ampullen, vorfüllbare Spritzen, Karpulen; Fläschchen, Flaschen, Spritzampullen und Glaszylinder umfassen. Die medizinischen Behälter können aus Glas oder Kunststoff gefertigt sein. Typischerweise werden die medizinischen Behälter jedoch nicht einzeln verarbeitet, sondern in Haltevorrichtungen dem nächsten Fertigungsschritt, beispielsweise Sterilisieren oder auch Silikonisieren, zugeführt. In der Regel umfassen die zu transportierenden medizinischen Behälter ein Haltemittel, beispielsweise einen Flansch, der in die Haltevorrichtung eingreift, so dass die Behälter hängend gehalten werden. Derartige Haltevorrichtungen werden auch als "Spritzennest" bezeichnet. Auch für den Weitertransport zu beispielsweise einem Abfüller werden solche Haltevorrichtungen verwendet. Die Haltevorrichtung wird dazu in eine Wanne eingesetzt, welche mit einer Membran versiegelt wird, so dass die Sterilität der medizinischen Behälter erhalten bleibt.
Beispielsweise enthält eine derartige Haltevorrichtung 100 oder 160 Aufnahmevorrichtungen für jeweils eine Spritze, wobei der Durchmesser einer Aufnahmevorrichtung (wegen der Form auch Zylinder genannt) beispielsweise 12,2 mm oder 9,4 mm beträgt. Der herzustellende Artikel "100er Nest Ø12,2 für RTF Spritzen" ist dementsprechend beispielsweise gekennzeichnet von einer Zylinder- bzw. Dom-Matrize mit insgesamt 100 Zylindern (Domen). Diese Zylinder sind zueinander mit Verbindungsstegen verbunden. Das Spritzgießwerkzeug zur Herstellung eines derartigen Spritzennests muss dementsprechend ebenso viele Kerne zur inneren Begrenzung der hohlzylindrischen Anteile und eine Matrize zur Begrenzung der Kavität enthalten.

Es wäre gemäß einem ersten Fall denkbar, dass bei der Herstellung eines aus einem Kunststoff (beispielsweise einem Thermoplast) hergestellten Werkstücks zur Erstarrung der Schmelze die entstandene Wärmemenge möglichst effizient abgeführt werden und somit zur Kühlung ein Temperiermedium eingesetzt werden muss, das unter Berücksichtigung der erforderlichen Viskosität eine möglichst niedrige Temperatur aufweist. Es gibt gemäß einem zweiten Fall Beispiele für Kunststoffe (beispielsweise Duroplaste und Elastomere), die in der Form noch vernetzen und dafür erwärmt werden müssen, womit das Temperiermedium zur Erwärmung eine höhere Temperatur aufweisen sollte. Die Prinzipien der vorliegenden Erfindung würden analog zur Kühlung als ersten Fall auch für eine Erwärmung als zweiten Fall funktionieren; der Einfachheit halber wird die vorliegende Erfindung aber nur für den ersten Fall, also für eine Kühlung, beschrieben.

Aufgrund der relativ großen Bauteilabmessungen und der beschriebenen geometrischen Bedingungen zeigt das beschriebene Spritzennest bei der Herstellung mittels Spritzgießverfahren ein stark ausgeprägtes Verzugsverhalten, welches auch zur Durchbiegung des resultierenden Formteils führt. Des Weiteren ist aufgrund des hohen Formteilvolumens mit der Entstehung einer relativ hohen Wärmemenge bei der Herstellung zu rechnen, welche im Hinblick auf die Kühlzeit und somit auch auf die Gesamtzykluszeit möglich effizient abgeführt werden muss.

Im Hinblick auf die Geometrie eines herzustellenden Werkstücks muss dabei eine konturnahe Kühlung verwirklicht werden. Da die übertragbare Wärmemenge größer ist, je größer die zur Verfügung stehende Oberfläche ist, muss besonders in den Stellen, die durch ein geringes Verhältnis von Werkstückoberfläche zu Werkstückvolumen gekennzeichnet sind, die Wärmemenge effektiv abgeführt werden. Dies sind beim Spritzennest besonders die Stellen, wo die hohlzylindrischen zweiten Anteile aufeinander und/oder auf den ersten plattenförmigen Anteil treffen.

Zur Abfuhr dieser Wärmemenge werden die derzeit sich im Einsatz befindlichen Werkzeuge mittels eines Reihenkühlungskonzepts temperiert. Dies bedeutet, dass ausgehend von einem Temperiermediumanschluss das Temperiermedium (meist Wasser oder Öl) nacheinander durch die Kühlkanalabschnitte und damit nacheinander durch die einzelnen Kerne transportiert wird. Durch dieses Kühlkonzept ergibt sich allerdings ein sehr hoher Druckverlust im Kühlsystem, da sich alle einzelnen Druckverluste zueinander addieren. Aufgrund dieser Tatsache wird der Volumenstrom gedrosselt und die Wärmeabfuhr stark minimiert. Dies wirkt sich negativ auf die Kühlzeit und somit negativ auf die Gesamtzykluszeit aus. Auch der starken Verzugsneigung des Artikels kann mit diesem Kühlkonzept nur sehr schlecht entgegengewirkt werden.

Ferner kann es durch den nur geringen Volumenstrom zu Verstopfungen im Kühlsystem kommen, da sich Schmutzpartikel leichter ablagern können. Dieses Problem ist aus der Praxis bekannt und erfordert einen hohen Wartungsaufwand.

Des Weiteren birgt dieses Kühlkonzept den Nachteil einer ungleichmäßigen Wärmeabfuhr am Artikel. Grund dafür ist, dass das Kühlmedium sich zwischen Kühlmittelzulauf und Kühlmittelablauf erwärmt. Beim seriellen Kühlkonzept weist nämlich das Temperiermedium eine weitaus geringere Temperatur auf, wenn es durch den ersten Kern transportiert wird, als wenn es durch den letzten Kern transportiert wird. Dadurch können die pro Kern entstehenden Wärmemengen nur ungleichmäßig abgeführt werden.

Außerdem führt der hohe Druckverlust bei der derzeit eingesetzten Reihenkühlung dazu, dass die Pumpenleistung der Temperiergeräte nicht effizient ausgenutzt wird. Der Wirkungsgrad des Temperiergerätes wird dabei verringert, was die Wirtschaftlichkeit herabsetzt.

Kühlsysteme für Spritzgussformen sind beispielsweise aus den Druckschriften JP H08 103930 A, JP 2006 007271 A oder JP 2007 276224 A bekannt.

Demnach ist es Aufgabe der vorliegenden Erfindung, ein Spritzgießwerkzeug mit einer möglichst einfachen und leistungsstarken Kühlungs- bzw. Temperiersystematik bzw. mit einem Temperiersystem zu entwickeln, welches eine einfache und übersichtliche Kühlungsverschlauchung bereitstellt und die zur Verfügung stehende Kühlleistung der Temperiergeräte effektiv ausnutzt.

Die Aufgabe wird gelöst durch ein Spritzgießwerkzeug mit einer Kavität zur Aufnahme einer Kunststoffschmelze, wobei die Kavität einen plattenförmigen ersten Anteil und eine Vielzahl von dazu senkrecht angeordneten und zueinander benachbart angeordneten hohlzylindrischen zweiten Anteilen umfasst, und mit einem Temperiersystem, welches in Kanalabschnitte unterteilte Temperierkanäle für den Transport eines Temperiermediums sowie einen ersten und einen zweiten Temperiermediumanschluss umfasst, wobei mindestens ein parallel zum ersten Anteil angeordneter erster Kanalabschnitt sowie mehrere zweite Kanalabschnitte vorgesehen sind, wobei die zweiten Kanalabschnitte mit einem ersten Ende mit dem ersten Kanalabschnitt und mit einem zweiten Ende jeweils mit einem ersten Ende eines dritten Kanalabschnitts verbunden sind, wobei die dritten Kanalabschnitte mit einem zweiten Ende mit einem parallel zum ersten Anteil angeordneten vierten Kanalabschnitt verbunden angeordnet sind, wobei jeweils einer der zweiten Kanalabschnitte und der mit ihm verbundene dritte Kanalabschnitt zumindest teilweise von einem der zweiten Anteile der Kavität umgeben angeordnet sind. Es ist vorgesehen, dass eine Mittelachse des mindestens einen vierten Kanalabschnitts jeweils weiter von einer Mittelachse der ihm zugeordneten zweiten Anteile beabstandet ist als der mindestens eine erste Kanalabschnitt, wobei ein Abstand zwischen der Mittelachse dieser zweiten Anteile und der Mittelachse des vierten Kanalabschnitts größer ist als ein Radius des vierten Kanalabschnitts.

Es wird also mit anderen Worten ein Parallelkühlkonzept verwirklicht, um möglichst alle Anforderungen an die Kühlsystematik für dieses Produktionswerkzeug zu erfüllen. Durch dieses Kühlkonzept ist es möglich, jeden der Kerne konturnah zu temperieren und dabei Druckverluste im Kühlkreislauf auf ein Minimum zu beschränken. Aufgrund dieses Sachverhalts ist es möglich, mit verhältnismäßig geringer Pumpenleistung der Temperiergeräte ein Maximum an Wärme abzuführen, da aufgrund des geringen Druckverlusts ein hoher Volumenstrom in den Kühlbohrungen bzw. in den Kanalabschnitten der Temperierkanäle durchgesetzt werden kann. Der erhöhte Durchsatz bzw. Volumenstrom beim vorliegenden Kühlkonzept hat zusätzlich den positiven Effekt, dass sich Schmutzpartikel im Kühlkreislauf nicht so leicht ablagern können und somit der allgemeine Werkzeugwartungsaufwand sinkt.

Dies führt wiederum zu Einsparungen bezüglich der Beschaffung und bezüglich des Energieverbrauchs der Temperiergeräte, was den Wirkungsgrad steigert. Gleichzeitig wird die Gesamtzykluszeit verkürzt, was die Wirtschaftlichkeit und Rentabilität des Prozesses immens steigern kann. Des Weiteren kann die Durchbiegung des Formteils verringert und damit dessen Qualität verbessert werden, da aufgrund der gleichmäßigen Wärmeabfuhr, welche durch den Einsatz der Parallelkühlung bewerkstelligt wird, das Schwundverhalten positiv beeinflusst wird.

Angesichts der Tatsache, dass die in sich parallel geschalteten Kühlkreisläufe in Hinblick auf die Temperiermediumzuführung nochmals beispielsweise mittels einer Verteilerplatte parallel geschaltet werden, kann der Verschlauchungsaufwand um ca. 80 % verringert werden. Dadurch können die Kosten für die Kühlungsverschlauchung erheblich gesenkt werden. Durch die Einsparung von Schläuchen für die Werkzeugtemperierung steigt auch die Arbeitsplatzergonomie, und die Gefahr, Kühlschläuche falsch anzuschließen, wird auf ein Minimum reduziert. Auch wird die während des Spritzgießprozesses bewegte Masse reduziert, was wiederum zu Energieeinsparungen führt.

Generell gilt, dass das Temperiermedium ausgehend vom ersten Temperiermediumanschluss zum zweiten Temperiermediumanschluss transportierbar ist (Fall 1) oder aber auch umgekehrt (Fall 2). Sämtliche Beschreibungen für Fall 1 gelten somit analog für Fall 2.

Gemäß einer bevorzugten Ausführungsform des Spritzgießwerkzeugs ist jeweils einer der zweiten Kanalabschnitte zumindest teilweise in einem Inneren des mit ihm verbundenen dritten Kanalabschnitts verlaufend angeordnet. Bevorzugt ist zumindest das zweite Ende des zweiten Kanalabschnitts von dem dritten Kanalabschnitt umgeben angeordnet. Weiter bevorzugt ist der jeweilige zweite Kanalabschnitt auf einem Anteil von 10% bis 90%, weiter bevorzugt von 30% bis 70%, und meist bevorzugt auf einem Anteil von 50% seiner Länge im Inneren des mit ihm verbundenen dritten Kanalabschnitts verlaufend angeordnet. Dies erleichtert die Montage des Kühlsystems, da eine geringere Länge an Kühlbohrungen im Material der eigentlichen Werkzeughälfte vorgesehen werden muss.

Denkbar wäre alternativ auch, dass der zweite Kanalabschnitt vom dritten Kanalabschnitt beabstandet und/oder im Wesentlichen parallel oder unter Ausbildung eines Winkels dazu im Inneren eines zweiten Abschnitts angeordnet ist.

Gemäß einer weiteren bevorzugten Ausführungsform ist es vorteilhaft, wenn eine Transportrichtung des Temperiermediums vom ersten Ende der zweiten Kanalabschnitte zum zweiten Ende der zweiten Kanalabschnitte gegenläufig ist zur Transportrichtung des Temperiermediums vom ersten Ende der dritten Kanalabschnitte zum zweiten Ende der dritten Kanalabschnitte. Mit anderen Worten erfordert die Anordnung der dritten Kanalabschnitte relativ zu den zweiten Kanalabschnitten eine Umkehr der Transportrichtung des Temperiermediums am Austritt aus dem zweiten Kanalabschnitt, also am zweiten Ende des zweiten Kanalabschnitts. Dies ist dann der Fall, wenn zum Beispiel der erste und der vierte Kanalabschnitt, in den ja die zweiten bzw. die dritten Kanalabschnitte münden, auf der gleichen Seite der Kavität - und damit beispielsweise in der gleichen Werkzeughälfte des Spritzgießwerkzeugs - angeordnet sind.

Denkbar ist auch, dass der erste und der vierte Kanalabschnitt auf unterschiedlichen Seiten der Kavität - und damit beispielsweise in unterschiedlichen Werkzeughälften des Spritzgießwerkzeugs - angeordnet und/oder beispielsweise mittels Schnellkupplungen verbindbar sind. In diesem Fall ist die Transportrichtung des Temperiermediums vom ersten Ende der zweiten Kanalabschnitte zum zweiten Ende der zweiten Kanalabschnitte gleichläufig zur Transportrichtung des Temperiermediums vom ersten Ende der dritten Kanalabschnitte zum zweiten Ende der dritten Kanalabschnitte.

Bevorzugt sind um eine Mittelachse eines der zweiten Anteile herum einer der zweiten Kanalabschnitte und der mit ihm verbundene dritte Kanalabschnitt rotationssymmetrisch angeordnet und/oder die zweiten Kanalabschnitte zylinderförmig und die dritten Kanalabschnitte hohlzylinderförmig ausgebildet.

Je nach Werkzeugform ist es denkbar, dass mindestens ein mit dem ersten Temperiermediumanschluss mittels einem siebten Kanalabschnitt verbunden angeordneter fünfter Kanalabschnitt angeordnet ist, von welchem ausgehend der erste Kanalabschnitt sich erstreckend angeordnet ist. Dabei ist der siebte Kanalabschnitt bevorzugt unmittelbar mit dem ersten Temperiermediumanschluss verbunden.

Weiterhin ist es denkbar, dass mindestens ein mit dem zweiten Temperiermediumanschluss mittels einem achten Kanalabschnitt verbunden angeordneter sechster Kanalabschnitt angeordnet ist, wobei der vierte Kanalabschnitt in den sechsten Kanalabschnitt mündend angeordnet ist. Dabei ist der achte Kanalabschnitt bevorzugt unmittelbar mit dem zweiten Temperiermediumanschluss verbunden.

Zur möglichst einfachen Herstellung der Bohrungen, welche die Kanalabschnitte ausbilden sollen, und zur möglichst gleichmäßigen Kühlung ist es vorteilhaft, wenn der erste, der vierte, der fünfte, der sechste, der siebte und/oder der achte Kanalabschnitt im Wesentlichen zylinderförmig ausgebildet sind.

Je nach Komplexität des Werkstücks kann es vorteilhaft sein, wenn mehrere beschriebene Kanalabschnitte vorgesehen sind. So ist es gemäß einer bevorzugten Ausführungsform vorgesehen, dass mindestens fünf, bevorzugt zehn oder sechzehn fünfte Kanalabschnitte und/oder mit mindestens einem der ersten Kanalabschnitte jeweils mindestens fünf, bevorzugt zehn zweite Kanalabschnitte verbunden angeordnet sind. Damit lassen sich insgesamt 100 bzw. 160 zweite und dritte Kühlkanalabschnitte und damit ein bevorzugtes Kühlsystem für die eingangs erwähnten Spritzennester abbilden.

Dies entspricht einer Anordnung, gemäß welcher mindestens fünf, bevorzugt zehn oder sechzehn sechste Kanalabschnitte und/oder in mindestens einen der vierten Kanalabschnitte jeweils mindestens fünf, bevorzugt zehn dritte Kanalabschnitte mündend angeordnet sind.

Damit lassen sich insgesamt 100 bzw. 160 zweite und dritte Kühlkanalabschnitte und damit ein bevorzugtes Kühlsystem für die eingangs erwähnten Spritzennester abbilden.

Für eine möglichst einfache Anbindung der Kanalabschnitte ohne drohende Kollision von ersten und vierten Kanalabschnitten ist es vorteilhaft, wenn der mindestens eine erste Kanalabschnitt jeweils weiter von dem ersten Anteil der Kavität beabstandet ist als der mindestens eine vierte Kanalabschnitt. Dies gilt vor allem für die Anbringung der ersten und vierten Kanalabschnitte in der gleichen Werkzeughälfte.

Gleichzeitig ist es vorteilhaft so, dass die Mittelachsen der Kerne, welche mittels einem einzelnen ersten Kanalabschnitt bzw. mittels den mit diesem einzelnen ersten Kanalabschnitt verbundenen zweiten und dritten Kanalabschnitten gekühlt werden, vorteilhaft alle die Mittelachse dieses ersten Kanalabschnitts schneiden. So ist für einen möglichst kurzen Transportweg des Temperiermediums gesorgt. Wenn der vierte Kanalabschnitt in der gleichen Werkzeughälfte wie der erste Kanalabschnitt angeordnet ist, kann für diesen allerdings nicht die gleiche Anordnung gewählt werden. Es ist vorgesehen, dass die Mittelachsen der entsprechenden Kerne nicht die Mittelachse des vierten Kanalabschnitts schneiden. Es ist ferner vorgesehen, dass die Mittelachsen der Kerne auch nicht den gesamten vierten Kanalabschnitt schneiden, so dass dessen Mittelachse beispielsweise senkrecht zu den Mittelachsen der Kerne angeordnet ist. Es ist vorgesehen, dass die Mittelachse des vierten Kanalabschnitts und dessen Außenbegrenzung von den Mittelachsen der Kerne beabstandet angeordnet ist, wobei ein Abstand zwischen den Mittelachsen der Kerne und der Mittelachse des vierten Kanalabschnitts größer ist als ein Radius des vierten Kanalabschnitts.

Es ist also der mindestens eine vierte Kanalabschnitt jeweils weiter von der Mittelachse der ihm zugeordneten zweiten Anteile beabstandet angeordnet als der mindestens eine erste Kanalabschnitt.

Weitere Vorteile, Ziele und Eigenschaften der vorliegenden Erfindung werden anhand nachfolgender Beschreibung der anliegenden Figuren erläutert. Gleichartige Komponenten können in den verschiedenen Ausführungsformen gleiche Bezugszeichen aufweisen.

In den Figuren zeigen:
- Fig. 1: eine perspektivische Ansicht eines Spritzennests;
- Fig. 2: eine Schnittdarstellung eines befüllten Spritzennests;
- Fig. 3a: eine Draufsicht auf eine erste Ausführungsform des erfindungsgemäßen Spritzgießwerkzeugs mit Ausbrüchen;
- Fig. 3b: eine Schnittdarstellung der ersten Ausführungsform des erfindungsgemäßen Spritzgießwerkzeugs;
- Fig. 4a: eine Draufsicht auf eine zweite Ausführungsform des erfindungsgemäßen Spritzgießwerkzeugs mit Ausbrüchen;
- Fig. 4b: eine Schnittdarstellung der zweiten Ausführungsform des erfindungsgemäßen Spritzgießwerkzeugs;
- Fig. 5: eine vergrößerte Darstellung eines Ausschnitts aus Fig. 3b;
- Fig. 6: eine vergrößerte Darstellung eines Ausschnitts aus Fig. 4b.

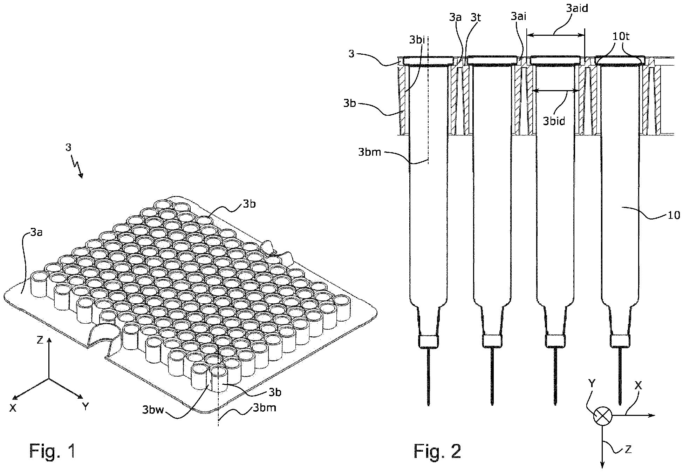

Fig. 1 zeigt eine isometrische Ansicht einer Haltevorrichtung 3 zum Transport von medizinischen Behältern 10 (siehe Fig. 2), welche auch als Spritzennest 3 bezeichnet wird und beispielsweise aus einem Thermoplast mittels eines Spritzgussprozesses hergestellt wurde. Die Haltevorrichtung 3 weist eine Höhenrichtung Z, eine Längsrichtung X sowie eine Breitenrichtung Y auf. Sie ist vorliegend mit einem plattenförmigen ersten Teil 3a und einer Vielzahl von hohlzylindrischen zweiten Anteilen 3b ausgestaltet, wobei in diesem Beispiel in Längsrichtung X je zehn und in Breitenrichtung Y je 16 zweite Anteile 3b, also insgesamt 160 zweite Anteile 3b angeordnet sind. Zu sehen ist, dass die zweiten Anteile 3b möglichst dicht aneinander angrenzend angeordnet sind, um die zur Verfügung stehende Fläche optimal auszunutzen. Dies führt dazu, dass lokal Wandungen 3bw von mehreren, beispielsweise drei zweiten Anteile 3b aufeinandertreffen und an dieser Position eine Stelle bilden, die durch ein geringes Oberfläche-Volumen-Verhältnis und damit eine verhältnismäßig geringe Wärmeabfuhr gekennzeichnet ist.

Fig. 2 zeigt einen Ausschnitt des Spritzennestes 3 aus Fig. 1 in befülltem Zustand, d.h. es ist in jedem zweiten Anteil 3b ein medizinischer Behälter 10, vorliegend eine RTF (Ready To Fill)-Spritze angeordnet. In dieser Ansicht ebenfalls zu sehen ist, dass eine innere Bohrung 3bi der hohlzylindrischen zweiten Anteile 3b sich bis zum ersten plattenförmigen Teil 3a erstreckt und innerhalb des ersten Anteile 3a von einer weiteren Bohrung 3ai ergänzt ist, also unmittelbar an diese angrenzend angeordnet ist. Der Durchmesser 3aid der weiteren Bohrung 3ai ist größer als der Durchmesser 3bid der ersten Bohrung 3bi, so dass zwischen den Durchmessern 3aid, 3bid ein Absatz 3t angeordnet ist. Auf diesen aufliegend ist jeweils ein Absatz 10t der Spritzen 10 angeordnet und somit gegen ein Verrutschen nach unten in Höhenrichtung Z gesichert.

Das so bestückte Spritzennest 3 wird anschließend in einer Wanne (hier nicht gezeigt) angeordnet und sterilisiert. Anschließend wird die Wanne mit einer Membran versiegelt.

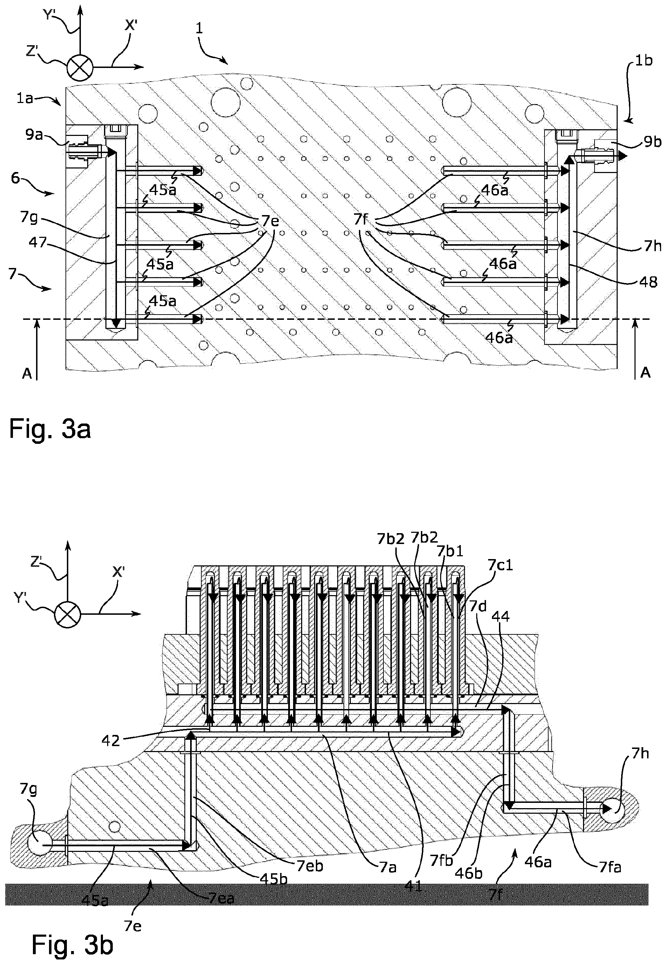

Fig. 3a zeigt einen Ausschnitt eines Temperiersystems 6 eines erfindungsgemäßen Spritzgießwerkzeugs 1 gemäß einer ersten Ausführungsform, welche zur Herstellung eines Spritzennests für 100 Spritzen geeignet ist. Das Spritzgießwerkzeug weist eine Höhenrichtung Z', eine Längsrichtung X' sowie eine Breitenrichtung Y' auf.

Zu sehen ist auf einer ersten Seite 1a des Spritzgießwerkzeugs 1 ein erster Temperiermediumanschluss 9a, mit welchen ein Kanalabschnitt 7g unmittelbar verbunden ist. In diesem siebten Kanalabschnitt 7g fließt ein Temperiermedium 8 mit einer Transportrichtung 47, welche vorliegend einer Breitenrichtung Y' des Spritzgießwerkzeugs 1 entspricht. Im rechten Winkel sind ausgehend vom siebten Kanalabschnitt 7g vorliegend fünf weitere fünfte Kanalabschnitte 7e angeordnet.

Auf einer zweiten Seite 1b des Spritzgießwerkzeugs 1 ist ein zweiter Temperiermediumanschluss 9b angeordnet, welcher vorliegend mit einem achten Kanalabschnitt 7h verbunden ist. In diesen achten Kanalabschnitt münden vorliegend fünf sechste Kanalabschnitte 7f.

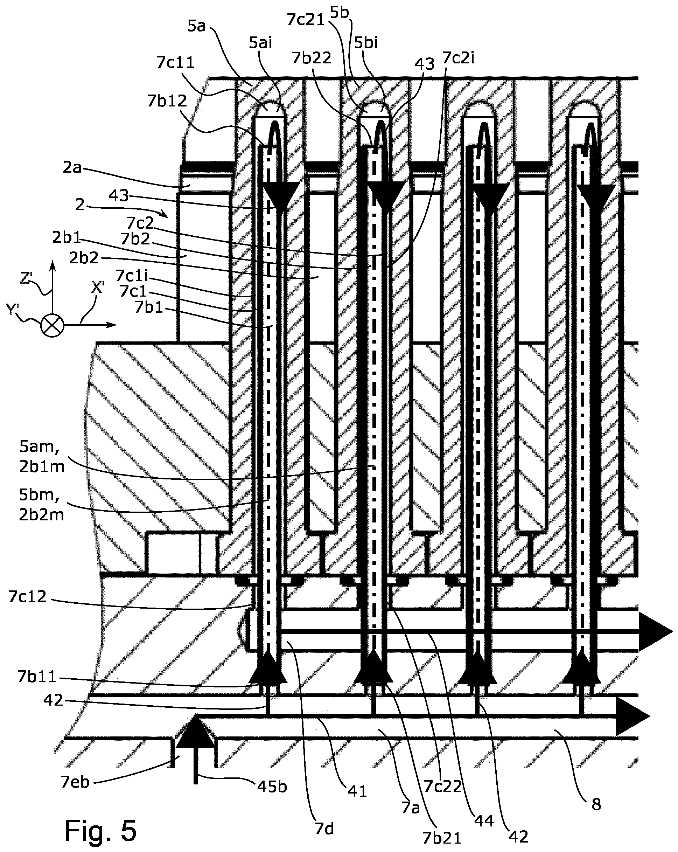

Die in Fig. 3b bzw. Fig. 5 abgebildeten in sich parallel geschalteten Kühlkreisläufe bestehend aus den Kanalabschnitten 7a bis 7d sind also mittels der Mehrzahl an fünften 7e und sechsten Kanalabschnitten 7f in Hinblick auf die Temperiermediumzuführung nochmals parallel geschaltet.

Hier ist die Transportrichtung des Temperiermediums 8 ausgehend vom ersten Temperiermediumanschluss 9a zum zweiten Temperiermediumanschluss 9b verlaufend (Fall 1).

Fig. 3b zeigt eine Ansicht des Spritzgießwerkzeugs aus Fig. 3a entlang eines Querschnitts an der Linie A-A, wobei jeweils nur einer der fünften Kanalabschnitte 7e zu sehen ist. Dieser lässt sich in einen ersten 7ea und einen weiteren Anteil 7eb unterteilen, wobei die Anteile 7ea, 7eb vorliegend in einem rechten Winkel zueinander angeordnet sind. Gleiches gilt analog für den sechsten Kanalabschnitt 7f mit erstem Anteil 7fa und zweitem Anteil 7fb.

Fig. 5 zeigt eine vergrößerte Ansicht eines Ausschnittes von Fig. 3b. Zu sehen ist ein Ausschnitt der hier ungefüllten Kavität 2 mit einem Teil des plattenförmigen ersten Anteils 2a und mehreren hohlzylindrisch ausgebildeten zweiten Anteilen 2b1, 2b2. Es werden im Folgenden nur ausgewählte zweite Anteile 2b1, 2b2 bzw. ausgewählte Kerne 5a, 5b beschrieben, wobei die Beschreibung jedoch auch für die restlichen zweiten Anteile und restlichen Kerne gilt.

Diese Anteile 2a, 2b1, 2b2 bilden die Negativform für die Anteile 3a, 3b des Spritzennests 3 und werden im Laufe des Herstellungsverfahrens mit Kunststoffschmelze gefüllt. Jedem zweiten Anteil 2b1, 2b2 ist ein Kern 5a, 5b (hier exemplarisch an zwei Kernen verdeutlicht) zugeordnet, welcher als innere Begrenzung die Ausbildung der gewünschten hohlzylindrischen Form der zweiten Anteile 2b1, 2b2 ermöglicht. Die Kerne 5a, 5b selbst sind ebenfalls im Wesentlichen hohlzylindrisch ausgebildet, wobei in einem Inneren 5ai, 5bi der Kerne 5a, 5b zur konturnahen Kühlung ein Teil des Temperiersystems 6 in Form von jeweils einem zweiten Kanalabschnitt 7b1, 7b2 und einem mit diesem verbundener dritten Kanalabschnitt 7c1, 7c2 angeordnet ist.

Vom fünften Kanal 7e im rechten Winkel ausgehend ist ein erster Kanalabschnitt 7a angeordnet, welcher parallel zum ersten Anteil 2a der Kavität 2 angeordnet ist. Von diesem wiederum zweigen vorliegend im rechten Winkel zehn zweite Kanalabschnitte 7b1, 7b2 ab, welche mit einem ersten Ende 7b11, 7b21 mit dem ersten Kanalabschnitt 7a und mit einem zweiten Ende 7b12, 7b22 jeweils mit einem ersten Ende 7c11, 7c21 eines dritten Kanalabschnitts 7c1, 7c2 verbunden sind, wobei die dritten Kanalabschnitte 7c1, 7c2 mit einem zweiten Ende 7c12, 7c22 mit einem parallel zum ersten Anteil 2a angeordneten vierten Kanalabschnitt 7d verbunden angeordnet sind.

Gleichzeitig sind vorliegend jeweils einer der zweiten Kanalabschnitte 7b1, 7b2 und der mit ihm verbundene dritte Kanalabschnitt 7c1, 7c2 zumindest teilweise von einem der zweiten Anteile 2b der Kavität 2 umgeben angeordnet, wobei jeweils einer der zweiten Kanalabschnitte 7b1, 7b2 zumindest teilweise bzw. abschnittsweise in einem Inneren 7c1i, 7c2i des mit ihm verbundenen dritten Kanalabschnitts 7c1, 7c2 verlaufend angeordnet ist.

Das Temperiermedium 8 strömt also am zweiten Ende 7b12, 7b22 aus den zweiten Kanalabschnitten 7b1, 7b2 hinaus und über das erste Ende 7c11, 7c21 der dritten Kanalabschnitte 7c1, 7c2 in diese hinein, wobei es eine Transportrichtungsumkehr erfährt.

Vorliegend ist eine Transportrichtung 42 des Temperiermediums 8 vom ersten Ende 7b11, 7b21 der zweiten Kanalabschnitte 7b1, 7b2 zum zweiten Ende 7b12, 7b22 der zweiten Kanalabschnitte 7b1, 7b2 gegenläufig zu einer Transportrichtung 43 des Temperiermediums 8 vom ersten Ende 7c11, 7c21 der dritten Kanalabschnitte 7c1, 7c2 zum zweiten Ende 7c12, 7c22 der dritten Kanalabschnitte 7c1, 7c2.

Um eine gedachte Mittelachse 2bm1, 2bm2 eines oder mehrerer der zweiten Anteile 2b1, 2b2 herum, welche vorliegend auch der Mittelachse 5am, 5bm der den jeweiligen zweiten Anteilen 2b1, 2b2 zugeordneten Kernen 5a, 5b entspricht, ist einer der zweiten Kanalabschnitte 7b1, 7b2 und der mit ihm verbundene dritte Kanalabschnitt 7c1, 7c2 rotationssymmetrisch angeordnet.

Gleichzeitig sind vorliegend die zweiten Kanalabschnitte 7b1, 7b2 zylinderförmig und die dritten Kanalabschnitte 7c1, 7c2 hohlzylinderförmig ausgebildet. Der erste 7a, der vierte 7d, der fünfte 7e, der sechste 7f, der siebte 7g und der achte Kanalabschnitt 7h sind vorliegend im Wesentlichen zylinderförmig ausgebildet.

Zu sehen ist, dass der mindestens eine erste Kanalabschnitt 7a jeweils weiter von dem ersten Anteil 2a der Kavität 2, also in Höhenrichtung Z' des Spritzgießwerkzeugs 1 beabstandet ist als der mindestens eine vierte Kanalabschnitt 7d.

Um den Übergang zwischen erstem Kanalabschnitt 7a und zweiten Kanalabschnitten 7b1, 7b2 sowie zwischen dritten Kanalabschnitten 7c1, 7c2 und viertem Kanalabschnitt 7d ohne Kollision vor allem von erstem 7a und viertem Kanalabschnitt 7d zu ermöglichen, ist der mindestens eine vierte Kanalabschnitt 7d jeweils weiter von der Mittelachse 2bm der ihm zugeordneten zweiten Anteile 2b1, 2b2 beabstandet als der mindestens eine erste Kanalabschnitt 7a.

Vorliegend sind also jeweils der erste 7a, der vierte 7d, der erste Anteil 7ea des fünften 7e sowie der erste Anteil 7fa des sechsten Kanalabschnitts 7f zueinander parallel verlaufend. Ebenfalls sind die zweiten 7b1, 7b2, die dritten 7c1, 7c2, der zweite Anteil 7eb des fünften 7e sowie der zweite Anteil 7fb des sechsten Kanalabschnitts 7f zueinander parallel verlaufend. Ferner ist der siebte Kanalabschnitt 7g und der achte Kanalabschnitt 7h zueinander parallel verlaufend angeordnet.

Die Fließrichtung 47 des Temperiermediums 8 im siebten Kanal 7g verläuft entgegengesetzt zur Fließrichtung 48 im achten Kanalabschnitt 7h. Gleiches gilt für die Fließrichtung 45b im zweiten Abschnitt 7eb des fünften Kanalabschnitts 7e in Relation zur Fließrichtung 46b im zweiten Abschnitt 7fb des sechsten Kanalabschnitts 7f. In die gleiche Richtung verlaufend sind die Fließrichtung 45a im ersten Abschnitt 7ea des fünften Kanalabschnitts 7e, die Fließrichtung 46a im ersten Abschnitt 7fa des sechsten Kanalabschnitts 7f, die Fließrichtung 41 im ersten Kanalabschnitt 7a und die Fließrichtung 44 im vierten Kanalabschnitt 7d.

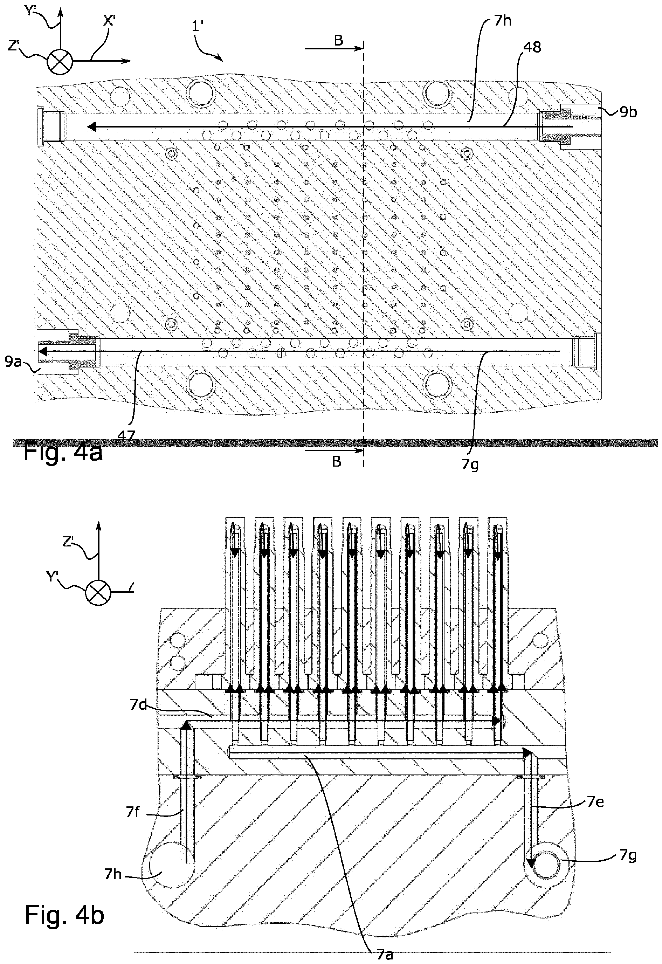

Die Fig. 4a zeigt eine Draufsicht auf eine weitere Ausführungsform des erfindungsgemäßen Spritzgießwerkzeugs 1', welches vorliegend zur Herstellung eines Spritzennests 3 für den Transport von 160 Spritzen 10 geeignet ist. Hier ist die Transportrichtung des Temperiermediums 8 ausgehend vom zweiten Temperiermediumanschluss 9b zum ersten Temperiermediumanschluss 9a verlaufend (Fall 2). Um Wiederholungen der restlichen Struktur und Anordnung zu vermeiden, wird im Übrigen auf die Beschreibung zu den Figuren 3a, 3b und 5 verwiesen.

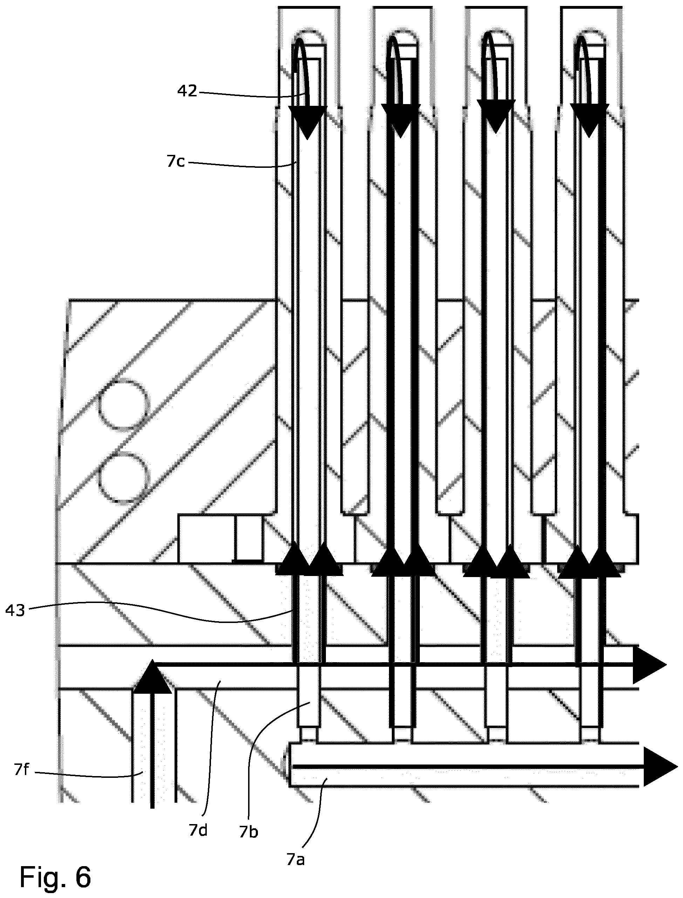

Fig. 4b zeigt eine Schnittansicht des Spritzgießwerkzeugs 1' gemäß Fig. 4a. In der Vergrößerung gemäß Fig. 6 ist zu sehen, dass bedingt durch die im Vergleich zu den Figuren 3a, 3b, 5 umgekehrte Transportrichtung des Temperiermediums 8 das Temperiermedium 8 am ersten Ende 7c11, 7c21 der dritten Kanalabschnitte 7c1, 7c2 hinaus und über das zweite Ende 7b12, 7b22 der zweiten Kanalabschnitte 7b1, 7b2 in diese hineinfließt, wobei es eine Transportrichtungsumkehr erfährt. In Fig. 6 ist jeweils nur ein Kern 5a bzw. ein zweiter 7b und ein dritter Kanalabschnitt 7c beschriftet. Für die restlichen, nicht beschrifteten zweiten und dritten Kanalabschnitte gilt jedoch die gleiche Beschreibung.

Der Vorteil von Fall 1 gegenüber Fall 2 ist, dass weniger Verwirbelungen bzw. ein geringerer Druckverlust beim Übertritt des Temperiermediums 8 von einem zylindrischen in einen hohlzylindrischen Kanalabschnitt als umgekehrt zu erwarten sind. Gleichzeitig bietet der Fall 2 den Vorteil, dass das Temperiermedium 8 konturnah durch den dritten Kanalabschnitt 7c1, 7c2 geschleust wird, wobei es eine noch geringere Temperatur als in den zweiten Kanalabschnitten 7b1, 7b2 aufweist.

### Bezugszeichenliste

- 1,1': Spritzgießwerkzeug
- 1a, 1b: Seiten
- 2: Kavität
- 2a, 2b1, 2b2: Anteile
- 2b1m, 2b2m: Mittelachse
- 3: Haltevorrichtung
- 3a, 3b: Anteile
- 3ai, 3bi: Bohrung
- 3aid, 3bid: Durchmesser
- 3t, 10t: Absatz
- 3bw: Wandung
- 5a, 5b: Kerne
- 5ai, 5bi: Inneres der Kerne
- 5am, 5bm: Mittelachse der Kerne
- 6: Temperiersystem
- 7: Temperierkanal
- 7a-7f: Kanalabschnitte
- 7ea-7fb: Anteile
- 7b11-7c22: Enden der Kanalabschnitte
- 7c1i, 7c2i: Inneres der Kanalabschnitte
- 8: Temperiermedium
- 9a, 9b: Temperiermediumanschluss
- 10: medizinische Behälter
- 41-48: Transportrichtung
- X, X': Längsausdehnung
- Y, Y': Breitenausdehnung
- Z, Z': Höhenausdehnung

## Patentansprüche

1. Spritzgießwerkzeug (1) mit einer Kavität (2) zur Aufnahme einer Kunststoffschmelze, wobei die Kavität (2) einen plattenförmigen ersten Anteil (2a) und eine Vielzahl von dazu senkrecht angeordneten und zueinander benachbart angeordneten hohlzylindrischen zweiten Anteilen (2b1, 2b2) umfasst, und mit einem Temperiersystem (6), welches in Kanalabschnitte (7a-7h) unterteilte Temperierkanäle (7) für den Transport eines Temperiermediums (8) sowie einen ersten (9a) und einen zweiten Temperiermediumanschluss (9b) umfasst,
wobei mindestens ein parallel zum ersten Anteil (2a) angeordneter erster Kanalabschnitt (7a) sowie mehrere zweite Kanalabschnitte (7b1, 7b2) vorgesehen sind, wobei die zweiten Kanalabschnitte (7b1, 7b2) mit einem ersten Ende (7b11, 7b21) mit dem ersten Kanalabschnitt (7a) und mit einem zweiten Ende (7b12, 7b22) jeweils mit einem ersten Ende (7c11, 7c21) eines dritten Kanalabschnitts (7c1, 7c2) verbunden sind, wobei die dritten Kanalabschnitte (7c1, 7c2) mit einem zweiten Ende (7c12, 7c22) mit einem parallel zum ersten Anteil (2a) angeordneten vierten Kanalabschnitt (7d) verbunden angeordnet sind, wobei jeweils einer der zweiten Kanalabschnitte (7b1, 7b2) und der mit ihm verbundene dritte Kanalabschnitt (7c1, 7c2) zumindest teilweise von einem der zweiten Anteile (2b1, 2b2) der Kavität umgeben angeordnet sind,
**dadurch gekennzeichnet, dass**
eine Mittelachse des mindestens einen vierten Kanalabschnitts (7d) jeweils weiter von einer Mittelachse (2b1m, 2b2m) der ihm zugeordneten zweiten Anteile (2b1, 2b2) beabstandet ist als der mindestens eine erste Kanalabschnitt (7a), wobei ein Abstand zwischen der Mittelachse (2b1m, 2b2m) dieser zweiten Anteile (2b1, 2b2) und der Mittelachse des vierten Kanalabschnitts (7d) größer ist als ein Radius des vierten Kanalabschnitts (7d).

2. Spritzgießwerkzeug (1) nach Anspruch 1,
**dadurch gekennzeichnet, dass**
jeweils einer der zweiten Kanalabschnitte (7b1, 7b2) zumindest teilweise in einem Inneren (7c1i, 7c2i) des mit ihm verbundenen dritten Kanalabschnitts (7c1, 7c2) verlaufend angeordnet ist.

3. Spritzgießwerkzeug (1) nach Anspruch 1 oder 2,
**dadurch gekennzeichnet, dass**
eine Transportrichtung (42) des Temperiermediums (8) vom ersten Ende (7b11, 7b21) der zweiten Kanalabschnitte (7b1, 7b2) zum zweiten Ende (7b12, 7b22) der zweiten Kanalabschnitte (7b1, 7b2) gegenläufig ist zu einer Transportrichtung (43) des Temperiermediums (8) vom ersten Ende (7c11, 7c21) der dritten Kanalabschnitte (7c1, 7c2) zum zweiten Ende (7c12, 7c22) der dritten Kanalabschnitte (7c1, 7c2).

4. Spritzgießwerkzeug (1) nach Anspruch 1 oder 2,
**dadurch gekennzeichnet, dass**
um eine Mittelachse (2b1m, 2b2m) eines der zweiten Anteile (2b1, 2b2) herum einer der zweiten Kanalabschnitte (7b1, 7b2) und der mit ihm verbundene dritte Kanalabschnitt (7c1, 7c2) rotationssymmetrisch angeordnet sind und/oder die zweiten Kanalabschnitte (7b1, 7b2) zylinderförmig und die dritten Kanalabschnitte (7c1, 7c2) hohlzylinderförmig ausgebildet sind.

5. Spritzgießwerkzeug (1) nach einem der vorhergehenden Ansprüche,
**dadurch gekennzeichnet, dass**
mindestens ein mit dem ersten Temperiermediumanschluss (9a) mittels einem siebten Kanalabschnitt (7g) verbunden angeordneter fünfter Kanalabschnitt (7e) angeordnet ist, von welchem ausgehend der erste Kanalabschnitt (7a) sich erstreckend angeordnet ist.

6. Spritzgießwerkzeug (1) nach einem der vorhergehenden Ansprüche,
**dadurch gekennzeichnet, dass**
mindestens ein mit dem zweiten Temperiermediumanschluss (9b) mittels einem achten Kanalabschnitt (7h) verbunden angeordneter sechster Kanalabschnitt (7f) angeordnet ist, wobei der vierte Kanalabschnitt (7d) in den sechsten Kanalabschnitt (7f) mündend angeordnet ist.

7. Spritzgießwerkzeug (1) nach einem der vorhergehenden Ansprüche,
**dadurch gekennzeichnet, dass**
der erste (7a), der vierte (7d), der fünfte (7e), der sechste (7f), der siebte (7g) und/oder der achte Kanalabschnitt (7h) im Wesentlichen zylinderförmig ausgebildet sind.

8. Spritzgießwerkzeug (1) nach einem der vorhergehenden Ansprüche,
**dadurch gekennzeichnet, dass**
mindestens fünf fünfte Kanalabschnitte (7e) und/oder mit mindestens einem der ersten Kanalabschnitte (7a) jeweils mindestens fünf, bevorzugt jeweils mindestens zehn zweite Kanalabschnitte (7b1, 7b2) verbunden angeordnet sind.

9. Spritzgießwerkzeug (1) nach einem der vorhergehenden Ansprüche,
**dadurch gekennzeichnet, dass**
der mindestens eine erste Kanalabschnitt (7a) jeweils weiter von dem ersten Anteil (2a) der Kavität (2) beabstandet ist als der mindestens eine vierte Kanalabschnitt (7d).

## Claims

1. Injection mould (1) having a cavity (2) for receiving a polymer melt, the cavity (2) comprising a plate-shaped first portion (2a) and a plurality of hollow-cylindrical second portions (2b1, 2b2) perpendicular thereto and adjacent to one another, and having a temperature-regulating system (6), which comprises temperature-regulating channels (7) divided into channel segments (7a-7h) for conveying a temperature-regulating medium (8), and a first (9a) and a second temperature-regulating-medium connection (9b),
at least one first channel segment (7a) parallel to the first portion (2a) and a plurality of second channel segments (7b1, 7b2) being provided, the second channel segments (7b1, 7b2) being connected by a first end (7b11, 7b21) to the first channel segment (7a) and by each second end (7b12, 7b22) to a first end (7c11, 7c21) of a third channel segment (7c1, 7c2), the third channel segments (7c1, 7c2) being connected by a second end (7c12, 7c22) to a fourth channel segment (7d) that is parallel to the first portion (2a), each of the second channel segments (7b1, 7b2) and the third channel segment (7c1, 7c2) connected thereto being arranged at least partly surrounded by one of the second portions (2b1, 2b2) of the cavity,
**characterised in that**
a central axis of the at least one fourth channel segment (7d) is spaced further away in each case from a central axis (2b1m, 2b2m) of the second portions (2b1, 2b2) associated therewith than the at least one first channel segment (7a), a distance between the central axis (2b1m, 2b2m) of said second portions (2b1, 2b2) and the central axis of the fourth channel segment (7d) being greater than a radius of the fourth channel segment (7d).

2. Injection mould (1) according to claim 1,
**characterised in that**
each of the second channel segments (7b1, 7b2) is arranged so as to extend at least partly in an interior (7c1i, 7c2i) of the third channel segment (7c1, 7c2) connected thereto.

3. Injection mould (1) according to either claim 1 or claim 2,
**characterised in that**
a conveying direction (42) of the temperature-regulating medium (8) from the first end (7b11, 7b21) of the second channel segments (7b1, 7b2) to the second end (7b12, 7b22) of the second channel segments (7b1, 7b2) is opposite to a conveying direction (43) of the temperature-regulating medium (8) from the first end (7c11, 7c21) of the third channel segments (7c1, 7c2) to the second end (7c12, 7c22) of the third channel segments (7c1, 7c2).

4. Injection mould (1) according to either claim 1 or claim 2,
**characterised in that**
one of the second channel segments (7b1, 7b2) and the third channel segment (7c1, 7c2) connected thereto are arranged rotationally symmetrically about a central axis (2b1m, 2b2m) of one of the second portions (2b1, 2b2) and/or the second channel segments (7b1, 7b2) are formed cylindrically and the third channel segments (7c1, 7c2) are formed hollow-cylindrically.

5. Injection mould (1) according to any of the preceding claims,
**characterised in that**
at least one fifth channel segment (7e), from which the first channel segment (7a) is arranged to extend, is arranged so as to be connected to the first temperature-regulating-medium connection (9a) by means of a seventh channel segment (7g).

6. Injection mould (1) according to any of the preceding claims,
**characterised in that**
at least one sixth channel segment (7f) is arranged so as to be connected to the second temperature-regulating-medium connection (9b) by means of an eighth channel segment (7h), the fourth channel segment (7d) being arranged so as to lead into the sixth channel segment (7f).

7. Injection mould (1) according to any of the preceding claims,
**characterised in that**
the first (7a), the fourth (7d), the fifth (7e), the sixth (7f), the seventh (7g) and/or the eighth channel segment (7h) are substantially formed cylindrically.

8. Injection mould (1) according to any of the preceding claims,
**characterised in that**
at least five fifth channel segments (7e) and/or at least five, preferably at least ten, second channel segments (7b1, 7b2) are each arranged so as to be connected to at least one of the first channel segments (7a).

9. Injection mould (1) according to any of the preceding claims,
**characterised in that**
the at least one first channel segment (7a) is in each case spaced further away from the first portion (2a) of the cavity (2) than the at least one fourth channel segment (7d).

## Revendications

1. Outil de moulage par injection (1) comportant une cavité (2) pour la réception d'une matière plastique fondue, dans lequel la cavité (2) comporte une première partie (2a) en forme de plaque et une pluralité de secondes parties (2b1, 2b2) cylindriques creuses qui sont disposées à proximité l'une de l'autre perpendiculairement à la première partie, et comportant un système de thermorégulation (6), lequel comporte des canaux de thermorégulation (7) divisés en parties canal (7a-7h) pour le transport d'un milieu de thermorégulation (8) ainsi qu'un premier (9a) et un second (9b) raccord de milieu de thermorégulation,
dans lequel au moins une première partie canal (7a) disposée parallèlement à la première partie (2a) ainsi que plusieurs deuxièmes parties canal (7b1, 7b2) sont prévues, dans lequel les deuxièmes parties canal (7b1, 7b2) sont reliées par une première extrémité (7b11, 7b21) à la première partie canal (7a) et par une seconde extrémité (7b12, 7b22) dans chaque cas à une première extrémité (7c11, 7c21) d'une troisième partie canal (7c1, 7c2), dans lequel les troisièmes parties canal (7c1, 7c2) sont disposées reliées par une seconde extrémité (7c12, 7c22) à une quatrième partie canal (7d) disposée parallèlement à la première partie (2a), dans lequel dans chaque cas l'une des deuxièmes parties canal (7b1, 7b2) et la troisième partie canal (7c1, 7c2) reliée à celle-ci sont disposées entourées au moins en partie par l'une des secondes parties (2b1, 2b2) de la cavité,
**caractérisé par le fait que**
un axe médian de ladite au moins une quatrième partie canal (7d) est dans chaque cas à plus grande distance d'un axe médian (2b1m, 2b2m) des secondes parties (2b1, 2b2) associées à celle-ci que ladite au moins une première partie canal (7a), dans lequel une distance entre l'axe médian (2b1m, 2b2m) de ces secondes parties (2b1, 2b2) et l'axe médian de la quatrième partie canal (7d) est plus grande qu'un rayon de la quatrième partie canal (7d).

2. Outil de moulage par injection (1) selon la revendication 1,
**caractérisé par le fait que**
dans chaque cas l'une des deuxièmes parties canal (7b1, 7b2) est disposée pour s'étendre au moins en partie dans un intérieur (7c1i, 7c2i) de la troisième partie canal (7c1, 7c2) reliée à celle-ci.

3. Outil de moulage par injection (1) selon l'une des revendications 1 ou 2,
**caractérisé par le fait que**
une direction de transport (42) du milieu de thermorégulation (8) de la première extrémité (7b11, 7b21) des deuxièmes parties canal (7b1, 7b2) à la seconde extrémité (7b12, 7b22) des deuxièmes parties canal (7b1, 7b2) est opposée à une direction de transport (43) du milieu de thermorégulation (8) de la première extrémité (7c11, 7c21) des troisièmes parties canal (7c1, 7c2) à la seconde extrémité (7c12, 7c22) des troisièmes parties canal (7c1, 7c2).

4. Outil de moulage par injection (1) selon l'une des revendications 1 ou 2,
**caractérisé par le fait que**
l'une des deuxièmes parties canal (7b1, 7b2) et la troisième partie canal (7c1, 7c2) reliée à celle-ci sont disposées à symétrie de rotation autour d'un axe médian (2b1m, 2b2m) de l'une des secondes parties (2b1, 2b2) et/ou les deuxièmes parties canal (7b1, 7b2) sont configurées de façon cylindrique et les troisièmes parties canal (7c1, 7c2) sont configurées cylindriques creuses.

5. Outil de moulage par injection (1) selon l'une des revendications précédentes
**caractérisé par le fait que**
au moins une cinquième partie canal (7e) est disposée, laquelle est disposée reliée au premier raccord de milieu de thermorégulation (9a) au moyen d'une septième partie canal (7g), la première partie canal (7a) étant disposée pour s'étendre à partir de la cinquième partie canal.

6. Outil de moulage par injection (1) selon l'une des revendications précédentes,
**caractérisé par le fait que**
au moins une sixième partie canal (7f) est disposée, laquelle est disposée reliée au second raccord de milieu de thermorégulation (9b) au moyen d'une huitième partie canal (7h), la quatrième partie canal (7d) étant disposée débouchant dans la sixième partie canal (7f).

7. Outil de moulage par injection (1) selon l'une des revendications précédentes,
**caractérisé par le fait que**
la première (7a), la quatrième (7d), la cinquième (7e), la sixième (7f), la septième (7g) et/ou la huitième (7h) partie canal sont disposées sensiblement cylindriques.

8. Outil de moulage par injection (1) selon l'une des revendications précédentes,
**caractérisé par le fait que**
au moins cinq cinquièmes parties canal (7e) sont disposées et/ou dans chaque cas au moins cinq, de préférence, dans chaque cas au moins dix deuxièmes parties canal (7b1, 7b2) sont disposées reliées à au moins l'une des premières parties canal (7a).

9. Outil de moulage par injection (1) selon l'une des revendications précédentes,
**caractérisé par le fait que**
ladite au moins une première partie canal (7a) est dans chaque cas à une plus grande distance de la première partie (2a) de la cavité (2) que ladite au moins une quatrième partie canal (7d).
